# EUROPEAN PATENT SPECIFICATION

(11) **EP 3 015 489 B1**
(45) Date of publication and mention of the grant of the patent: **15.01.2020**
(21) Application number: 15425090.6
(22) Date of filing: 29.10.2015
(51) Int. Cl.: C08H 8/00, C08K 5/00, C08K 5/053, C08L 3/02

(54) **BIODEGRADABLE AND COMPOSTABLE MATERIAL FOR PACKAGING OBTAINED FROM THE USE OF THE WHOLE WASTES OF PRODUCTION OF FOOD INDUSTRIES**
BIOLOGISCH ABBAUBARES UND KOMPOSTIERBARES, AUS DEN GESAMTEN ABFÄLLEN DER PRODUKTION DER LEBENSMITTELINDUSTRIE HERGESTELLTES VERPACKUNGSMATERIAL
MATÉRIAU BIODÉGRADABLE ET COMPOSTABLE POUR EMBALLAGE OBTENU À PARTIR DE L'UTILISATION DE L'ENSEMBLE DES DÉCHETS DE PRODUCTION DES INDUSTRIES ALIMENTAIRES

(30) Priority: 29.10.2014 IT RM20140612
(43) Date of publication of application: 04.05.2016
(73) Proprietor: Università degli Studi di Foggia, 71122 Foggia (IT)
(72) Inventor: Severini, Carla, 71100 Foggia (IT); Derossi, Antonio, 71100 Foggia (IT); De Pilli, Teresa, 71100 Foggia (IT)
(74) Representative: Santi, Filippo

(56) References cited:
- WO-A1-03/099539

## Description

The present invention concerns a biodegradable and compostable material for packaging obtained from the use of wastes coming from the industry of production and/or transformation of food of plant origin.

It is known that the growing sensitivity towards environmental problems requires that the materials and processes for the production of packaging are developed in accordance with and in protection of the environment. In this context, biopolymers (starch, lipids, proteins, fibers, etc.) which are present in the matrix of vegetable origin constitute excellent raw materials, since they are biodegradable, unless they are substantially modified, and may be composites, making it possible the promotion of an ecologically compatible system of management of wastes.

Currently, the increase in the demand for health foods, which meet adequate nutritional standards, is accompanied by an increasing sensitivity to environmental problems. There is also a continuous increase in the costs of raw material, often accompanied by a decrease in their availability. In this context there is a particular emphasis on recovering, recycling and exploiting industrial wastes. The industry of transformation of foods and drinks must bear high costs for the treatment of solid and liquid wastes: their use for animal feed or as fertilizer, without any pre-treatment, is not always possible because of intolerance of many animals in respect of some of their components and for the well-known inhibiting properties in respect of germination.

Among the best examples of emission of wastes from the production and transformation of food in general, those coming from the production of demi-preserved or preserved food of plant origin made from artichokes, asparagus, tomatoes, etc., are between the most important. In the case of industries for the production of beverages in general, the wine industry is certainly between the most sensitive to the ability to reuse their process wastes reducing their disposal costs.

In the production of vegetables, Italy is the main producer of artichokes in the world (50% of world production), followed by Spain and Argentina. In Italy the cultivation of artichokes is the most important after that of tomatoes and potatoes, especially for regions such as Puglia, Sicily, Campania, Lazio and Tuscany. The industry of preserved food based on artichokes generates a significant amount of waste, which mainly consist in the stems and in the bracts not directly usable for food purposes (70% of the artichokes turns out to be a waste product).

As far as the asparagus is concerned, on the contrary, the process wastes are essentially woody bases of the shoots, withered apexes and depigmented parts. The preparations being put on the fresh product provide an average rejection rate of about 30%, of which 55% is edible.

The situation of wine industry is even more critical, since it is characterised by the production of large amounts of solid organic wastes. The cultivation of grapes is the second in the world in terms of production (after that of oranges), with 61 million tons/year. Most of the solid wastes resulting from destemming (stalks), mashing and pressing (skins, seeds and dregs). In the making of white wine, the residue from the pressing of the must is made of skins and seeds, and in the making of red wine (with maceration) the residue is made of fermented vinasse (skins and pips). The stalks are 3-5% of the weight of the bunch. Besides these, other solid wastes are produced in different amounts depending on the winemaking process: residues of perlite and diatomaceous earth coming from the filtration of musts and wines, cellulose filters coming from the wine filtration, residues of the treatment of clarification using bentonite. The skins and the vinasses are destined to distillation, but this allows the recovery of a small part of the waste, consisting of ethyl alcohol and volatile molecules (grappa). Therefore, even the exhausted vinasses coming from the process of distillation can be treated as solid wastes of wine industry. The stalks are sometimes used as a fertilizer without any pre-treatment, while the other types of solid waste are disposed of as special waste.

It is not less important the industry of transformation of the tomato that, on average, annually works 110,000 tons of tomato producing 2500 tons of wastes consisting of skins and seeds.

Currently, the polymers and the materials used for the production of food packaging comprise a wide range of petroleum-based plastics, metals, glass, paper and cardboard or combination thereof. With the exception of paper and paperboard, all materials for packaging are currently based on non-renewable material. This implies the need to find alternative materials and innovative products that are based on renewable matrices. In addition, the materials for plastic packaging are often contaminated by food and biological substances, this makes it difficult to recycle, and in some cases it is not convenient. As a result, many thousands of tons of waste, made of plastic material, are accumulated in landfills, exacerbating the problem of waste disposal. Consequently, biodegradability is not only a functional need but also an important environmental feature.

As part of a cycle of sustainable material, biopolymers may, unlike the materials coming from oil, be produced at low cost in all countries, and therefore they are also economically viable. In a context of growing attention to environmental protection, the development of biodegradable packaging materials from renewable natural resources, is having a significant interest, particularly in the countries of the European Union.

In this context it is included the solution according to the present invention, which aims to provide an innovative material, totally biodegradable and compostable, to be used as raw material for the production of food packaging.

This and other results are obtained according to the present invention by proposing the use of the wastes from the industry of production and/or transformation of food of plant origin, without any preliminary or intermediate step of preparation, extraction, purification, of biopolymers present in it (avoiding the use of organic solvents having high environmental impact and difficult to dispose), and the simplicity and the low cost of production of the material forming object of patenting.

The object of the present invention is therefore to provide biodegradable and compostable packaging materials obtained from the use of wastes coming from the industry of production and/or transformation of foods of plant origin that can overcome the limitations of biodegradable packaging materials according to the prior art and to obtain the previously described technical results.

A further object of the invention is that said biodegradable and compostable packaging materials can be realised by means of a small number of processing steps and with substantially contained costs.

Another object of the invention is to propose biodegradable and compostable packaging materials that are simple, safe and reliable.

It is therefore a specific object of the present invention a biodegradable and compostable material for packaging obtainable from the use of wastes coming from the industry of production and/or transformation of food of plant origin, chosen among bracts and stems of artichokes; woody bases of shoots, withered apical parts and depigmented parts of asparagus; peel and seeds of tomatoes, and/or stalks, pips, skins, seeds and dregs coming from the wine industry, in a manufacturing process comprising a preliminary step of drying, a step of controlling the particle size of said waste and, if necessary, a step of grinding of said waste to a particle size in the range between 200 and 300 microns, and a step of extrusion-cooking, wherein said step of extrusion-cooking does not require the addition of plastic polymers or the chemical modification of starch or the use of chemical catalysts but only the addition of water and plasticizers.

Additionally, always according to the invention, said preliminary step of drying is apt to obtain a chemically and microbiologically stable dried product, with a value of water activity, expressed as the ratio between the vapor pressure of water in the product and the vapor pressure of pure water, at the same temperature, lower than 0,3; and a humidity value lower than 10%; and comprises substeps of drying alternated to substeps of reviving.

Preferably, according to the invention, said step of extrusion-cooking provides for the addition of glycerol as a plasticizer, added in amounts comprised between 10 and 23% by weight, preferably between 18 and 23% by weight, more preferably equal to 20% by weight.

Further, always according to the invention, before said step of extrusion-cooking, said wastes are mixed with starchy material, preferably starchy flour in the same weight ratio.

Preferably, according to the present invention, said step of extrusion-cooking takes place in stages, with temperatures varying from a value lower than 50°C in the first stages, to a value comprised between 80 and 120°C in the last stages, preferably 100 °C.

Additionally, always according to the present invention, after said step of extrusion-cooking, said material has a humidity value lower than 50%, preferably equal to 43%.

Finally, according to the present invention, after said step of extrusion-cooking, it can be provided for a step of molding and a step of drying.

Noteworthy are the advantages that come from the biodegradable and compostable material for packaging obtained from the use of the wastes coming from the industry of production and/or transformation of food of plant origin of the present invention. First, it resolves the problem of disposing of processing wastes coming from the industry of production and transformation of food of plant origin, which is in some cases a significant cost of production. Not only that, in addition to reducing disposal costs to zero (except the costs of storage of the same), the wastes themselves acquire an added value, as they become raw material for the realization of the biodegradable and compostable packaging. Additionally, in some cases, the life cycle of the production and/or transformation of food of plant origin may also be completed within the same company thus eliminating the costs for transport and storage of this material and reducing those for the purchase of packaging made of paper, cardboard or plastic. In addition, the substitution of plastic packaging, not easily degradable and with a high environmental impact, with packagings based on fully biodegradable materials, would lead to a significant reduction of the environmental impact of the company itself. This characteristic is in high demand both by consumers and by the new European policies (HORIZON 2020). This means that the use of packaging material according to the invention may lead to the acquisition of new market shares and to the incentives provided for companies that contribute to reducing environmental pollution through more sustainable production.

The invention will be described below for illustrative but not limitative purposes, with particular reference to illustrative examples and with particular reference to the figures of the accompanying drawings, in which:
- Figure 1 shows a block diagram of the process for production of a biodegradable and compostable material for packaging from production wastes from the industry of production and transformation of food of plant origin, according to the present invention, particularly applied to wastes from the working of fresh asparagus, as in Example 1,
- Figure 2 shows the preferred drying diagram of the process of example 1,
- Figure 3 shows the particle size distribution curves of the powders coming from the grinding of the wastes of asparagus dried in example 1,
- Figure 4 shows a comparative histogram of the values of breaking load and flexibility of the biodegradable and compostable material for packaging obtained from example 1 and those of containers of various materials generally used for the realization of food packaging, and
- Figure 5 shows a comparative histogram of the values of breaking load and flexibility of the biodegradable and compostable material for packaging obtained from example 1 after staying for eight days in different storage conditions.

The present invention concerns a biodegradable and compostable packaging obtained from the use of the wastes from the industry of production and transformation of food of plant origin and in particular concerns the direct use of wastes of plant foods, without providing for any pretreatment of extraction, modification and purification of its main biopolymers (fibers, proteins, waxes, etc.) by means of physical or chemical systems, and mixing with starchy flour without addition of plastic polymers, chemically or mechanically unmodified. In this, the biodegradable and compostable packaging according to the present invention is distinguished from biodegradable packaging according to the prior art, the realization of which involves the use of components extracted from organic matrices, which involves a considerable economic cost and difficulty in the development of the step of extraction and purification.

To show the scheme of production of the biodegradable and compostable packaging according to the present invention, its application and its properties, in the following description a prototype made with wastes from the treatment of fresh asparagus is given by way of example.

### Example 1. Production of a biodegradable and compostable material for packaging from wastes of asparagus

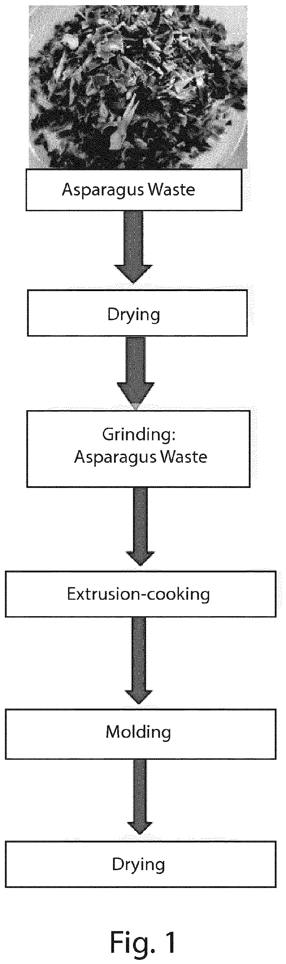

In particular, figure 1 shows the block diagram of the process of production of the biodegradable and compostable material for packaging according to the present invention, in the particular case of processing of the wastes from the treatment of fresh asparagus. For this type of waste, consisting essentially of the woody bases of the shoots, withered apexes and depigmented parts, it was developed first a step of drying by means of hot air current, in order to obtain a product that was chemically and microbiologically stable, or that had a value of water activity (a_{w}: ratio between the vapor pressure of water in the product and the vapor pressure of pure water, at the same temperatures) next to 0.2-0.3 and a humidity value lower than 10%.

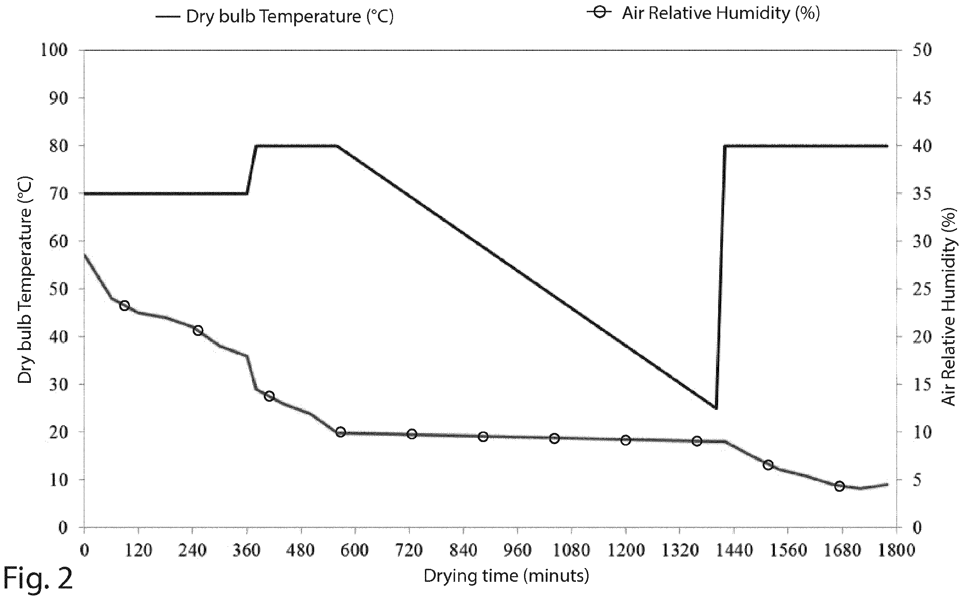

In particular, referring to Figure 2, in which along the abscissa axis is indicated the time of drying, expressed in minutes, along the ordinate axis on the left is shown the temperature of a dry bulb thermometer, expressed in °C, and along the ordinate axis on the right is shown the relative humidity of the air, the optimal treatment of drying concerning wastes in the processing of fresh asparagus provides for a drying at 70 °C for 6 hours followed by a step at 80 °C for 3 hours, a period of reviving at room temperature for 6 hours and a final step of drying at 80 °C for 6 hours.

This treatment, in which the temperature of drying is varied over time, allows to obtain a material with very low values of humidity and water activity (7.65% and 0.26, respectively) and a very fragile structure (with load at break equal to 29 N). These characteristics are essential to achieve a stable material from the microbiological and chemical point of view and, therefore, which can be stored for a long time at room temperature and suitable for the subsequent step of grinding, in order to obtain a powder with a fine and homogeneous particle size. As will be explained in the following, the latter feature is essential to obtaining biodegradable and compostable packaging according to the present invention.

In order to obtain, after grinding, a powder with the right particle size, the drying cycle must be modulated according to the type and the size of the matrix of the wastes of plant origin. In particular, according to the embodiment used by way of example in the present description, reference is made to wastes having large size, being very heterogeneous (asparagus shoots and tips) and mainly consisting of cellulose, hemicellulose, and other non-soluble fibers. Therefore, for smooth and quick drying, a not very high temperature has been applied in the early stages of dehydration (70 °C), in order to avoid the formation of an excessively dehydrated surface layer, which could make difficult the subsequent step of dehydration of the central area, resulting in uneven distribution of the residual water inside the plant matrix. This would involve, in fact, the presence of leathery zones, which would be difficult to grind, with the consequent production of coarse material, not suitable for the next step of extrusion. If this condition is reached, there would be a reduced reuse of the plant waste and an extension of the step of grinding which might result not only in an increased energy expenditure, but also in excessive heating of the machined vegetable matrix, with a consequent reduction of the suitability to the next step of extrusion. For the same reasons, in drying of the wastes of asparagus, it is also envisaged and preferred the presence of steps of reviving, in order to facilitate a rebalancing of the residual moisture inside the vegetable matrix.

This embodiment of the step of drying may be extended to wastes of plant origin similar to asparagus, like artichokes (bracts and stems) or wastes coming from the wine industry (stalks, skins, etc.) or tomato. In the case, instead, of homogeneous and small in size wastes, as can be the powders of coffee coming from extraction of the beverage, it is possible to apply a drying at constant and not high temperature (for example 40 °C for 24 h), to favor a gradual dehydration, without compromising some thermally sensitive compounds that could face degradation, giving the packaging bad odor (off flavors). In the case of coffee powders, a drying at elevated temperature, for example, might favor the degradation of the lipid fraction, present in this type of waste. The same argument can be extended to other fat rich wastes such as pips from the production of wine.

Subsequent to drying, the waste material can be sent to the out- and-out step of manufacture of the biodegradable and compostable packaging. This step is realized by means of extrusion-cooking of the waste material, since this technology is able to turn materials that are very different for chemical and physical composition in homogeneous materials with appropriate form. However, this technology is not suitable to process coarse sized materials, so in the case of waste material such as that covered by the present exemplification it is necessary to proceed, first, to a step of grinding, to turn it into a fine and homogeneous powder.

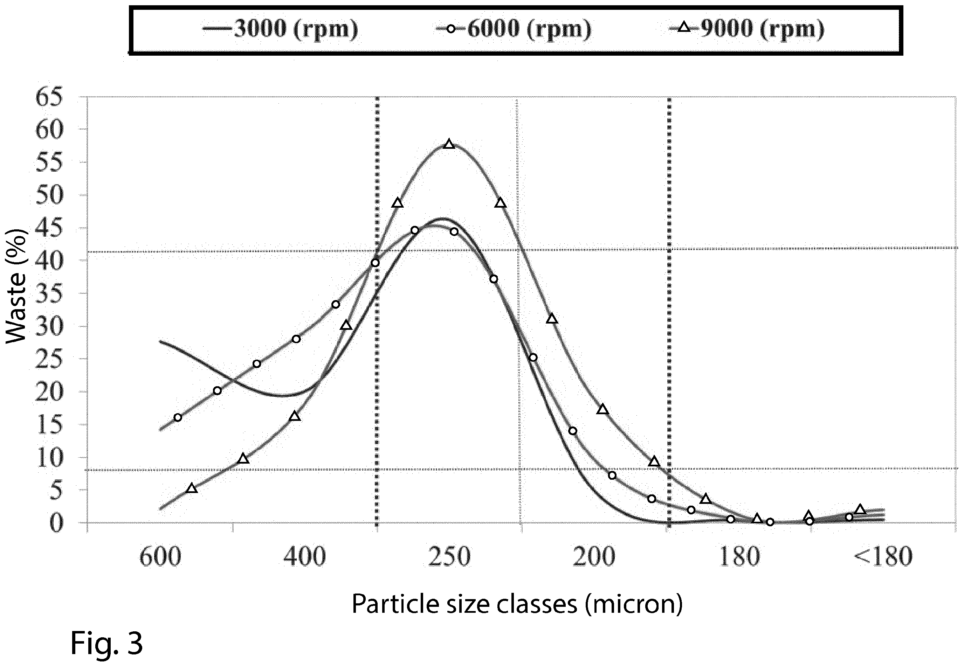

Therefore, before proceeding to the step of extrusion-cooking, the wastes of asparagus dried in this example were sent to a step of grinding. This operation was conducted with a blade mill and the conditions under which a fine material was obtained with homogeneous particle size fraction comprised between 200 and 300 microns, or having values close to those of the flours from cereals (Figure 3) provided for a rotation speed of the blades of 9000 rpm for a time of 3 minutes.

A homogeneous granulometry compatible with the size of the powders from plants and those of starchy flour is essential to the realization of biodegradable and compostable material for packaging according to the present invention, since it allows to avoid possible discontinuities in the extruded matrix, which would determine points of disintegration and breaking of the extruded material (before dewatering) compromising the step of molding and, after drying, the molded material would prove to be fragile and not flexible or tough.

The ground wastes of plant origin were subsequently mixed with starchy material, with the function of binding component by virtue of the contribution of gelatinized starch, to avoid that the final product can otherwise disintegrate. It was used a by-product of the milling of durum wheat (middlings) for the low price and market value of this starchy raw material with respect to refined flour of wheat (wheat flour type 0 or 00) or bran or pure starch in the view to contain the costs of production.

More particularly, the powder from waste of asparagus thus obtained was mixed with by-products of the milling of cereals in a 1:1 ratio and subjected to extrusion-cooking by means of a pilot twin-screw extruder-cooker CLEXTRAL mod. BC21 (Ferminy, France). The extruder is equipped with two co-rotating and intermeshing screws of 21mm in diameter and 900mm in length and has a maximum production capacity of 30 kg/h. It consists of nine modules of 100mm each; the extrusion chamber is equipped with eight heating zones and nine cooling zones. The rotation speed of the screws is is kept constant at a value of 150 rpm and the chosen profile of the screws is reported in Table 1. The plant is eqipped with a circular drawing machine having a diameter of 50 mm with a rectangular slot having a height of 0.3cm and a width of 3cm.

**Table 1**

| Type of elements of the screws | Details of the elements of the screws (pitch/length) | Length Total (mm) |
|---|---|---|
| Trapezoidal double thread | 50/50 | 50 |
| | 50/50 | 100 |
| | 33.3/50 | 150 |
| | 33.3/50 | 200 |
| | 33.3/50 | 250 |
| | 33.3/50 | 300 |
| | 33.3/50 | 350 |
| | 25/50 | 400 |
| | 25/50 | 450 |
| | 25/50 | 500 |
| Conjugated double thread | 25/50 | 550 |
| | 16.6/50 | 600 |
| | 16.6/50 | 650 |
| | 16.6/50 | 700 |
| | 16.6/50 | 750 |
| | 16.6/50 | 800 |
| | 16.6/50 | 850 |
| | 16.6/25 | 875 |
| | 16.6/25 | 900 |

The profile of the screws forth in Table 1 must be formed only of blending elements and not by cutting elements, since a modification of the fibrous material (for example, a reduction in size) could adversely affect the mechanical properties and the moistening ability of the biodegradable and compostable material for packaging of the present invention after molding and drying. Another element influenced by the profile of the screws is represented by the gelatinization of starch, which may be reduced at the expense of dextrinization, with consequent loss of plasticity of the extruded material which must be subjected to molding.

The powders were added with appropriate liquid ingredients, namely water and a plasticizing agent (glycerol), which were dosed by means of a volumetric pump PD 5006 Heidolph (Milan). The ratio of water and plasticizing agent (plasticizer) is 1:1 while the inlet flow rate of the liquid ingredients is 7 L/h. The rate of supply of the powder (ie the by-products of the milling of durum wheat and powder wastes of dehydrated and ground asparagus) is kept constant at a value equal to 9.2 kg/h (ss).

The proportion of plasticiser and the type of starchy flour and of the plant waste used are crucial to the end result. In particular, values of plasticizer below 20% (10-18%) can be adopted, with good possibilities for molding the extruded material, if the waste has a vegetable fat fraction around 10% (5-15%). Matrices formed from fiber such as asparagus, artichokes, etc., require percentages higher than 18%, in order to ensure the necessary plastic properties of the extruded material to be molded and patterned before dewatering. However, rates of over 23% for mixtures containing starchy flour that is rich in fiber (waste of wheat milling) or very fibrous wastes of vegetal origin such as asparagus, artichokes, etc.. results in excessive hydration of the final material for packaging (extruded product, molded and dried) during exposure to air, caused both by the presence in excess of plasticizing agent (glycerol) and of fiber, which have moistening properties. This would make the material obtained according to the invention not suitable to its use as packing, because of its rapid loss of mechanical properties and its degradation.

The rotation speed of the screws of the extruder affects the residence time, encapsulation of air, mixing of the solid and liquids ingredients and cutting efforts (working pressure and friction forces). According to the present example, the values of this parameter should not be higher than 300 rpm (rotations per minute), since otherwise there would be too much air in the matrix, resulting in the presence of discontinuities in the extruded, molded and dried matrix, which would represent the break points of the material. Also, a high production of friction would result in a heating of the matrix, resulting in evaporation of water at the exit of the extruder and loss of plasticity, an essential requirement for the molding.

Values lower than 150 rpm would entail an excessive dwell time of the mixture inside the extruder and make it difficult processing at the indicated flow rates of the flours and the liquid ingredients, with subsequent block of the system.

The plant of extrusion-cooking is equipped with automated control of the temperature and pressure as well as with a special software for reading the values of the set parameters. The heating system of the installation is made by electric resistances. The temperature profile adopted provides for a gradual increase in the extrusion temperature in the first seven modules (20; 25; 30; 35; 50; 60 and 70 °C), while the temperature of the remaining two is set to 110 °C.

The temperature profile is also important and changes depending on the processed vegetable matrix and starchy flour. Generally it represents the know-how of the companies that produce extruded materials. In the present invention, it is proposed a gradual increase of the temperature in the first six modules of the extruder, to facilitate the hydration of the flours and the gelatinization of the starch present in the starchy flour. These temperatures must not exceed 50 °C during the first 4 modules, to avoid excessive evaporation of water at the expense of hydration of the blends of the flours; so also must not exceed 70 °C in the fifth, sixth and seventh module, to limit the dextrinization of starch at the expense of gelatinization, which would be caused by the strong pressures and shear stresses which are generated in this area.

In the case of pregelatinized flour, the temperatures can be even lower than 45 °C in the first five modules, because it is only needed to rehydrate the starchy flour and not to induce gelatinization of starch. In the last section or in the eighth and ninth module, where the material is forced to pass through the drawing machine, it is important that the material is fluid and fully plasticized, but the temperature must not be higher than 120 °C to avoid excessive dehydration caused by the high temperature and by the instantaneous vaporization of water within the extruded matrix, due to the abrupt pressure drop which occurs at the expenses of the material that comes out from the system, since it passes from 10-20 atm (within the plant in the last section, called pumping section) on the outside, in which there is the pressure of 1 atmosphere. The excessive dehydration would lead to a rapid stiffening of the material, which would go from a rubbery-plastic state, easily workable and mouldable, to a leathered and rigid, or in the worst case glassy state, that would make the extruded product not suitable for molding. Values lower than 80 °C does not guarantee the necessary gelatinization and/or hydration of starch, thus, the plasticization of the extruded material that is inconsistent and difficult to mold.

At the exit of the extruder, the extruded material is used to make containers of varying shape: pan, box, cylindrical tube, etc. and later these containers were dehydrated in a stream of air at the temperature of 40 °C for about 12 hours.

### Example 2. Characterization of the biodegradable packagings

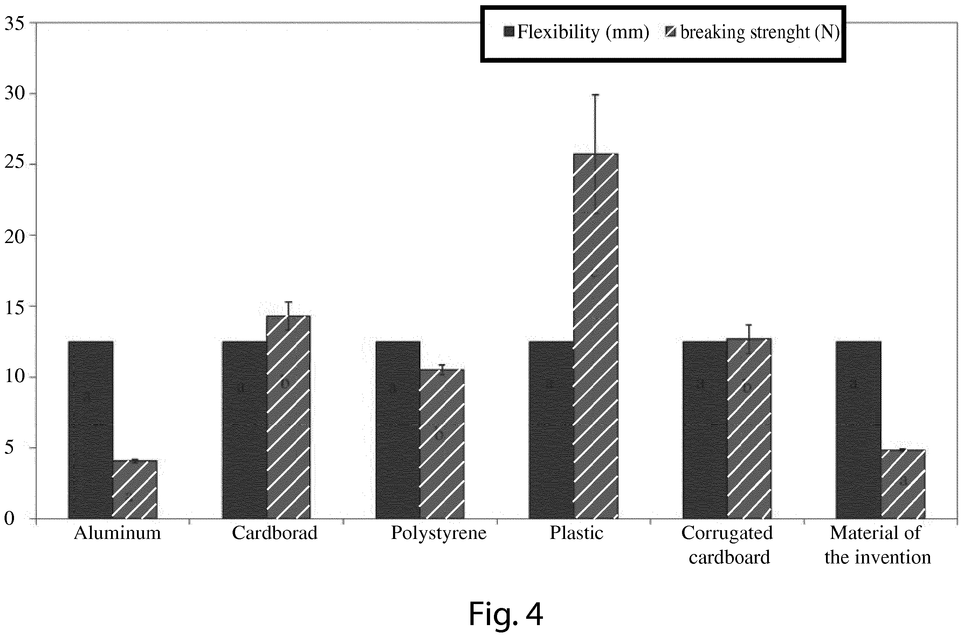

To evaluate the mechanical properties of the material obtained a test of flexibility was conducted. Therefore, for comparative purposes, the characteristics of mechanical resistance and flexibility were evaluated on the most used materials for the production of food packaging (cardboard, corrugated cardboard, plastic, aluminum and polystyrene) and on the innovative biodegradable and compostable material obtained in Example 1. The obtained resultats are reported in Figure 4 and demonstrated that, in term of flexibility, the material according to the present invention is comparable to that of other tested materials and its resistance is comparable to that of aluminum containers.

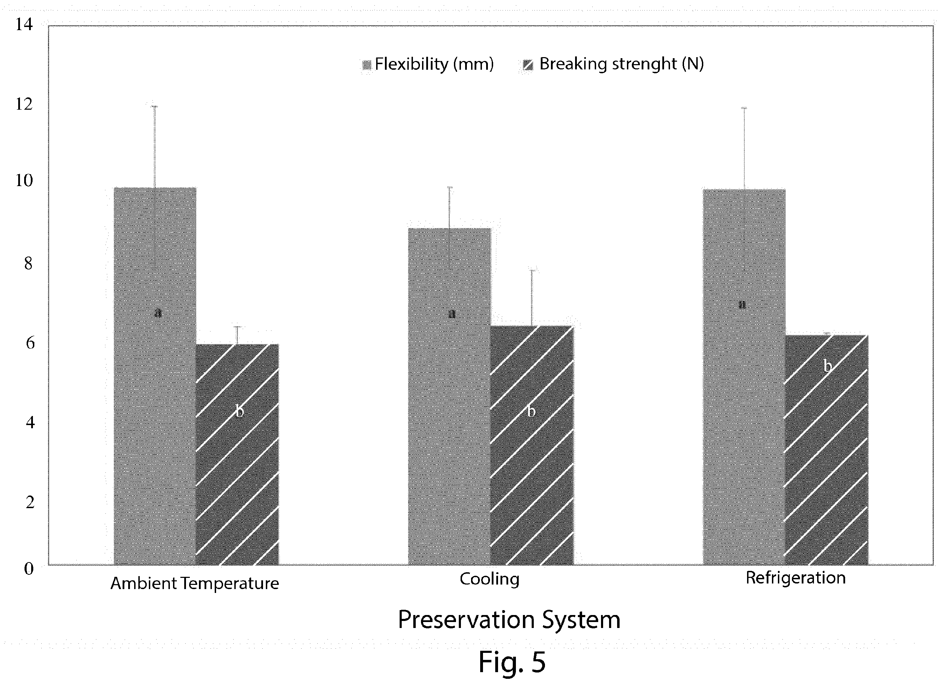

In order to assess the effect of low temperatures on the material obtained after having been extruded and dried, a part of the material obtained in Example 1 was stored at refrigeration temperature (4 °C) and another part at freezing temperatures (-20 °C) for 8 days. The remaining fraction of the same sample was stored at room temperature, free of any coating. After storing, the refrigerated and frozen materials were left at room temperature (without any coating) for 24 hours and only later tests of flexibility have been carried out. The results obtained have shown that low temperatures, even those of freezing, do not alter the mechanical properties of the material (as shown in Figure 5). This result is very important because it shows that the prototype can also be used for the production of packagings which are intended to contain foods that will be stored at temperatures below zero degrees Celsius.

Tests of assessment of the biodegradability and compostability of the material for packaging according to the present invention were also conducted.

The results of these tests are shown in Table 2 with reference values provided for in the Decree. 75/2010 and in the UNI EN ISO 13432: 2002.

The UNI EN ISO 13432 is a technical standard for the "Requirements for packaging to be recovered through composting and biodegradation - Test scheme and evaluation criteria for the final acceptance of packaging" and defines the criteria to define the characteristics that a material must possess to be regarded as biodegradable or compostable. The term "compostable" refers to requirements related to the non-toxicity of the decomposed material if dispersed in nature. In Annex 2 of Legislative Decree 75 of 2010 are reported the requirements that a material must have to be used as an "improver" in order to maintain or improve the physical or chemical properties or the biological activity of the soil.

From the observation of the obtained data, the obtained material is totally biodegradable. In fact, according to EN 13432 and EN 14995, a material is called biodegradable if it degrades at least 90% within 6 months (180 days). From the analysis conducted, on an average of 5 samples, it was found that the material has achieved a percentage of biodegradability equal to 97 ± 0.84%. Thus it falls fully within the definition of biodegradable material for packaging. Not only that, the analysis carried out also showed that this material is covered fully in accordance with both the UNI EN ISO 13432: 2002 and in those of the Decree. n. 75/2010, therefore it is compostable and can thus be used as organic fertilizer in the final stage of its life cycle.

**Table 2**

| | *Mean values* | *St. Dev.* | *Limits according to D.lgs. 75*/*2010* | *Limits of the norm UNI EN ISO 13432:2002* |
|---|---|---|---|---|
| Biodegradability (%) | 97.40 | 0.87 | *90* | 90 |
| pH | 7.28 | 0.19 | *6-8.5* | |
| Humidity at 105 °C (%) | 11.90 | 0.92 | *<50* | |
| Total solids, fixed total solids-Residue 550 °C (%) | 2.24 | 0.22 | - | |
| Total organic substance (%) | 98.20 | 0.46 | - | |
| *Total organic carbon (%) | 57.85 | 1.66 | ³*20* | |
| *Total nitrogen (as N) (%) | 1.77 | 0.18 | - | |
| C/N ratio | 32.85 | 2.32 | *25* | |
| *Organic nitrogen | 1.62 | 0.13 | - | |
| Organic N/total N ratio (%) | 91.85 | 2.64 | ³*80* | |
| *Plastic materials, glass and metals ≥2 mm (%) | 0.00 | 0.00 | *0.5* | *10* |
| *Lithoid interts ≥5 mm (%) | 0.00 | 0.00 | *5* | |
| *Cadmium mg/kg | 0.03 | 0.02 | *1.5* | *0.5* |
| *Hexavalent chromium mg/kg | <0.01 | 0.00 | *0.5* | *50* |
| *Mercury mg/kg | <0.01 | 0.00 | *1.5* | *0.5* |
| *Nickel mg/kg | 0.96 | 0.10 | *100* | *25* |
| *Lead mg/kg | 1.01 | 0.13 | *140* | *50* |
| *Copper mg/kg | 2.21 | 0.41 | *2.03* | *50* |
| *Zinc mg/kg | 13.54 | 1.91 | *11.87* | *150* |
| Salmonella | Absent/25 g | | *Absent*/*25 g* | |
| Escherichia coli | 0.00 | 0.00 | *0* | |
| Static breathing index (as O₂) | 173.67 | 4.51 | *178* | |
| Germination index | 93.33 | 3.06 | *90* | ³*90* |
| Nitrogen mineralisation index | 1.53 | 0.24 | *1.37* | |
| *Values expressed on a dried base | | | | |

Always to evaluate the performance of the material according to the present invention the barrier properties to water vapor (WVTR) were also assessed and compared with some materials that are commonly used for the production of food packaging. From the observation of the results reported in Table 3 it is evident that the material according to the present invention presents a barrier to water vapor higher than other packages with the exception of the aluminum foil which is completely impermeable to water.

**Table 3**

| Material | WVTR(30°C, 90% UR)g/m²·day |
|---|---|
| Aluminum | 0 |
| Material of the invention | 3,16·10⁻³ |
| Cardboard | 2,00·10⁻² |
| Cellophane | 3,75·10⁻² |

It follows that the material for packaging according to the present invention may find application in the production of trays, boxes or other types of containers intended for the packaging of foods stored both at room temperature and under a regime of refrigeration or frozen and quick-frozen. It can be assumed that the potential use of the material according to the present invention, after an appropriate study of industrialization, both on the production of secondary packaging to be used for packaging, for example of bakery products (trays that contain brioches packaged in plastic packaging), of drinks (realization of diaphragms in which to place bottles of wine packaged in cardboard boxes which is the tertiary packaging, base for bakery tray, etc.), trays covered with plastic films for the packaging of meat, fish and fresh fruit and vegetables, etc.

In conclusion, the biodegradable and compostable material for packaging according to the present invention allows to achieve the results prefixed.

In particular, the main advantages that derive from the use of the proposed material of packaging are the following:
- the adoption of a production technology of simple application (does not require specialized personnel); free effluent (zero environmental impact) and use of systems that require low investment costs and reduced energy consumption;
- the waste material should not be subjected to any pretreatment, but after a possible drying and reduction in powder form, can be transformed directly, without resorting to steps of extraction with solvents or other expensive physical systems;
- the recovery and exploitation of waste materials;
- the elimination of the problem of storage, transport and disposal of organic substances with a consequent reduction of production costs;
- the reduction of costs related to the purchase of material for packaging;
- the improval to the sustainability of the production activity of the company;
- the integral use of renewable, biodegradable and compostable raw materials that can be used as biological fertilizer at the end of the life cycle of packaging;
- the possibility for the company to improve its competitiveness, gaining new market share and access to public incentives.

The present invention has been described for illustrative but not limitative purposes, according to its preferred embodiments, but it is to be understood that variations and/or modifications may be made by those skilled in the art.

## Claims

1. Biodegradable and compostable material for packaging obtained from the use of wastes coming from the industry of production and/or transformation of food of plant origin chosen among bracts and stems of artichokes; woody bases of shoots, withered apical parts and depigmented parts of asparagus; peel and seeds of tomatoes, and/or stalks, pips, skins, seeds and dregs coming from the wine industry according to a manufacturing process comprising a preliminary step of drying of said wastes, a step of controlling the particle size of said wastes and, if necessary, a step of grinding of said wastes to a particle size in the range between 200 and 300 microns, and a step of extrusion-cooking of said wastes, **characterised in that** said step of extrusion-cooking does not require the addition of plastic polymers or the chemical modification of starch or the use of chemical catalysts but only the addition of water and plasticizers.

2. Biodegradable and compostable material for packaging according to claim 1, **characterised in that** said preliminary step of drying is apt to obtain a chemically and microbiologically stable dried product, with a value of water activity, expressed as the ratio between the vapor pressure of water in the product and the vapor pressure of pure water, at the same temperature, lower than 0,3 and a humidity value lower than 10%.

3. Biodegradable and compostable material for packaging according to claim 2, **characterised in that** said preliminary step of drying comprises substeps of drying alternated to substeps of reviving.

4. Biodegradable and compostable material for packaging according to any one of the preceding claims, **characterised in that** in said step of extrusion-cooking water and plasticizers are added in 1:1 ratio between them.

5. Biodegradable and compostable material for packaging according to any one of the preceding claims, **characterised in that** said wastes coming from the industry of production and/or transformation of food of plant origin are not subjected to any pretreatment of extraction, modification and/or purification, but to the addition of plasticizers such as glycerol, that does not cause the production of waste effluents, coming from the process of extraction or purification, having high environmental impact such as solvents or synthetic chemicals.

6. Biodegradable material for packaging according to claim 4 or 5, **characterised in that** said plasticizers are added in amounts comprised between 10 and 23% by weight, preferably between 18 and 23% by weight, more preferably equal to 20% by weight.

7. Biodegradable and compostable material for packaging according to any one of the preceding claims, **characterised in that**, before said step of extrusion-cooking, said wastes are mixed with starchy material, preferably starchy flour in the same weight ratio.

8. Biodegradable and compostable material for packaging according to any one of the preceding claims, **characterised in that** said step of extrusion-cooking takes place in stages, with temperatures varying from a value lower than 50°C in the first stages, to a value comprised between 80 and 120°C in the last stages.

9. Biodegradable and compostable material for packaging according to any one of the preceding claims, **characterised in that**, after said step of extrusion-cooking, said material has a humidity value lower than 50%, preferably equal to 43%.

10. Biodegradable and compostable material for packaging according to any one of the preceding claims, **characterised in that**, after said step of extrusion-cooking, it comprises a step of molding and a step of drying.

## Patentansprüche

1. Biologisch abbaubares und kompostierbares Verpackungsmaterial, das aus der Verwendung von Abfällen erhalten wird, die aus der Produktions- und/oder Verarbeitungsindustrie von Lebensmitteln pflanzlichen Ursprungs stammen, ausgewählt aus Deckblättern und Stielen von Artischocken; holzigen Basen von Trieben, verwelkten apikalen Teilen und depigmentierten Spargelteilen; Schalen und Samen von Tomaten und/oder Stielen, Kernen, Häuten, Samen und Bodensatz, die aus der Weinindustrie kommen, gemäß eines Herstellungsverfahrens, umfassend einen vorbereitenden Schritt des Trocknens der Abfälle, einen Schritt des Steuerns der Teilchengröße der Abfälle und, wenn notwendig, einen Schritt des Mahlens der Abfälle auf eine Teilchengröße in dem Bereich zwischen 200 und 300 Mikrometer, und einen Schritt des Extrusionskochens der Abfälle, **dadurch gekennzeichnet, dass** der Schritt des Extrusionskochens eine Zugabe von Kunststoffpolymeren oder die chemische Modifizierung von Stärke oder die Verwendung von chemischen Katalysatoren nicht erfordert, sondern nur die Zugabe von Wasser und Weichmachern.

2. Biologisch abbaubares und kompostierbares Verpackungsmaterial nach Anspruch 1, **dadurch gekennzeichnet, dass** der vorbereitende Schritt des Trocknens geeignet ist, ein chemisch und mikrobiologisch stabiles getrocknetes Produkt zu erhalten, mit einem Wasseraktivitätswert, ausgedrückt als Verhältnis zwischen dem Dampfdruck von Wasser in dem Produkt und dem Dampfdruck von reinem Wasser bei der gleichen Temperatur, niedriger als 0.3 und einem Feuchtigkeitswert niedriger als 10%.

3. Biologisch abbaubares und kompostierbares Verpackungsmaterial nach Anspruch 2, **dadurch gekennzeichnet, dass** der vorbereitende Schritt des Trocknens Teilschritte des Trocknens abwechselnd mit Teilschritten des Wiederbelebens umfasst.

4. Biologisch abbaubares und kompostierbares Verpackungsmaterial nach einem der vorstehenden Ansprüche, **dadurch gekennzeichnet, dass** in dem Schritt des Extrusionskochens Wasser und Weichmacher in einem Verhältnis von 1:1 zugegeben werden.

5. Biologisch abbaubares und kompostierbares Verpackungsmaterial nach einem der vorstehenden Ansprüche, **dadurch gekennzeichnet, dass** die Abfälle, die aus der Produktions- und/oder Verarbeitungsindustrie von Lebensmitteln pflanzlichen Ursprungs stammen, keiner Vorbehandlung der Extraktion, Modifikation und/oder Reinigung unterzogen werden, sondern der Zugabe von Weichmachern, wie Glycerin, was keine Produktion von Abwässern verursacht, die von dem Extraktions- oder Reinigungsprozess kommen und eine hohe Umweltbelastung aufweisen, wie Lösungsmittel oder synthetische Chemikalien.

6. Biologisch abbaubares und kompostierbares Verpackungsmaterial nach Anspruch 4 oder 5, **dadurch gekennzeichnet, dass** die Weichmacher in Mengen zwischen 10 und 23 Gew.-%, vorzugsweise zwischen 18 und 23 Gew.-%, bevorzugter gleich 20 Gew.-% zugegeben werden.

7. Biologisch abbaubares und kompostierbares Verpackungsmaterial nach einem der vorstehenden Ansprüche, **dadurch gekennzeichnet, dass** vor dem Schritt des Extrusionskochens die Abfälle mit stärkehaltigem Material, vorzugsweise stärkehaltigem Mehl, im gleichen Gewichtsverhältnis gemischt werden.

8. Biologisch abbaubares und kompostierbares Verpackungsmaterial nach einem der vorstehenden Ansprüche, **dadurch gekennzeichnet, dass** der Schritt des Extrusionskochens in Stufen erfolgt, wobei die Temperaturen von einem Wert niedriger als 50 °C in den ersten Stufen bis zu einem Wert zwischen 80 und 120 °C in den letzten Stufen variieren.

9. Biologisch abbaubares und kompostierbares Verpackungsmaterial nach einem der vorstehenden Ansprüche, **dadurch gekennzeichnet, dass** das Material nach dem Schritt des Extrusionskochens einen Feuchtigkeitswert niedriger als 50 %, vorzugsweise gleich 43 % aufweist.

10. Biologisch abbaubares und kompostierbares Verpackungsmaterial nach einem der vorstehenden Ansprüche, **dadurch gekennzeichnet, dass** es nach dem Schritt des Extrusionskochens einen Schritt des Formens und einen Schritt des Trocknens umfasst.

## Revendications

1. Matériau biodégradable et compostable pour emballage obtenu par l'utilisation de déchets provenant de l'industrie de la production et/ou de la transformation d'aliments d'origine végétale choisis parmi les bractées et les tiges d'artichauts ; les bases ligneuses de pousses, les parties apicales fanées et les parties dépigmentées d'asperges ; la peau et les graines de tomates, et/ou les rafles, les pépins, les peaux, les graines et la lie provenant de l'industrie vinicole selon un procédé de fabrication comprenant une étape préliminaire de séchage desdits déchets, une étape de contrôle de la taille de particule desdits déchets et, si nécessaire, une étape de broyage desdits déchets jusqu'à une taille de particule située dans la plage allant de 200 à 300 microns, et une étape de cuisson par extrusion desdits déchets, **caractérisé en ce que** ladite étape de cuisson par extrusion ne nécessite pas l'ajout de polymères plastiques ou la modification chimique d'amidon ou l'utilisation de catalyseurs chimiques mais seulement l'ajout d'eau et de plastifiants.

2. Matériau biodégradable et compostable pour emballage selon la revendication 1, **caractérisé en ce que** ladite étape préliminaire de séchage est apte à obtenir un produit sec chimiquement et microbiologiquement stable, avec une valeur d'activité de l'eau, exprimée sous la forme du rapport entre la pression de vapeur d'eau dans le produit et la pression de vapeur d'eau pure, à la même température, inférieure à 0,3 et une valeur d'humidité inférieure à 10 %.

3. Matériau biodégradable et compostable pour emballage selon la revendication 2, **caractérisé en ce que** ladite étape préliminaire de séchage comprend des sous-étapes de séchage en alternance avec des sous-étapes de régénération.

4. Matériau biodégradable et compostable pour emballage selon l'une quelconque des revendications précédentes, **caractérisé en ce que** dans ladite étape de cuisson par extrusion de l'eau et des plastifiants sont ajoutés dans un rapport 1:1 entre eux.

5. Matériau biodégradable et compostable pour emballage selon l'une quelconque des revendications précédentes, **caractérisé en ce que** lesdits déchets provenant de l'industrie de la production et/ou de la transformation d'aliments d'origine végétale ne sont soumis à aucun prétraitement d'extraction, de modification et/ou de purification, mais à l'ajout de plastifiants tels que le glycérol, qui n'entraîne pas la production d'effluents de déchets, provenant du procédé d'extraction ou de purification, ayant un impact important sur l'environnement tels que les solvants ou les produits chimiques de synthèse.

6. Matériau biodégradable pour emballage selon la revendication 4 ou 5, **caractérisé en ce que** lesdits plastifiants sont ajoutés en des quantités comprises entre 10 et 23 % en poids, de préférence entre 18 et 23 % en poids, plus préférentiellement égales à 20 % en poids.

7. Matériau biodégradable et compostable pour emballage selon l'une quelconque des revendications précédentes, **caractérisé en ce que**, avant ladite étape de cuisson par extrusion, lesdits déchets sont mélangés avec un matériau amylacé, de préférence une farine amylacée dans le même rapport en poids.

8. Matériau biodégradable et compostable pour emballage selon l'une quelconque des revendications précédentes, **caractérisé en ce que** ladite étape de cuisson par extrusion se déroule par étapes, avec des températures variant à partir d'une valeur inférieure à 50 °C dans les premières étapes, jusqu'à une valeur comprise entre 80 et 120 °C dans les dernières étapes.

9. Matériau biodégradable et compostable pour emballage selon l'une quelconque des revendications précédentes, **caractérisé en ce que**, après ladite étape de cuisson par extrusion, ledit matériau présente une valeur d'humidité inférieure à 50 %, de préférence égale à 43 %.

10. Matériau biodégradable et compostable pour emballage selon l'une quelconque des revendications précédentes, **caractérisé en ce que**, après ladite étape de cuisson par extrusion, il comprend une étape de moulage et une étape de séchage.
